# EUROPEAN PATENT SPECIFICATION

(11) **EP 2 211 507 B1**
(45) Date of publication and mention of the grant of the patent: **23.10.2013**
(21) Application number: 08868017.8
(22) Date of filing: 03.12.2008
(51) Int. Cl.: H04L 29/06

(54) **METHOD, DEVICE AND SYSTEM FOR PROCESSING REAL TIME STREAMING PROTOCOL**
VERFAHREN, VORRICHTUNG UND SYSTEM ZUR VERARBEITUNG EINES REALTIME-STREAMING-PROTOKOLLS
PROCÉDÉ, DISPOSITIF ET SYSTÈME DE TRAITEMENT D'UN PROTOCOLE DE FLUX EN TEMPS RÉEL

(30) Priority: 03.12.2007 CN 200710195883; 26.03.2008 CN 200810086354
(43) Date of publication of application: 28.07.2010
(73) Proprietor: Huawei Technologies Co., Ltd., Longgang District, Shenzhen Guangdong 518129 (CN)
(72) Inventor: ZHU, Ning, Shenzhen Guangdong 518129 (CN)
(74) Representative: Thun, Clemens
(86) International application number: PCT/CN2008/073318
(87) International publication number: WO 2009/082908

(56) References cited:
- EP-A1- 1 619 853
- WO-A1-2007/093127
- CN-A- 1 656 772
- CN-A- 101 022 344
- CN-A- 101 022 401
- Editor H.248.55: "Updated draft new ITU-T Recommendation H.248.55 "Pull Mode Packages" (Ed. 0.9)", STUDY GROUP 16 TD 459 R1 (WP 2/16) , 6 July 2007 (2007-07-06), pages 1-24, XP002617535, Retrieved from the Internet: URL:http://wftp3.itu.int/av-arch/avc-site/ 2005-2008/0706_Gen/H248_55_output.zip [retrieved on 2011-01-20]
- WESTERLUND ERICSSON T ZENG M: "The evaluation of different NAT traversal Techniques for media controlled by Real-time Streaming Protocol (RTSP); draft-ietf-mmusic-rtsp-nat-evaluation-00.t xt", IETF STANDARD-WORKING-DRAFT, INTERNET ENGINEERING TASK FORCE, IETF, CH, vol. mmusic, 29 June 2007 (2007-06-29), pages 1-36, XP015051458,
- SCHULZRINNE COLUMBIA UNIVERSITY A RAO CISCO R LANPHIER REAL NETWORKS M WESTERLUND ERICSSON AB M STIEMERLING (ED) NEC H: "Real Time Streaming Protocol 2.0 (RTSP); draft-ietf-mmusic-rfc2326bis 16.txt", IETF STANDARD-WORKING-DRAFT, INTERNET ENGINEERING TASK FORCE, IETF, CH, vol. mmusic, no. 16, 19 November 2007 (2007-11-19), XP015053589,
- Editor H.248.RTSP: "H.248.RTSP Editor's Output", ITU-T STUDY GROUP 16, TD-73 , 23 January 2008 (2008-01-23), pages 1-41, XP002617536, Seoul Retrieved from the Internet: URL:http://ftp3.itu.ch/av-arch/avc-site/20 05-2008/0801_Seo/TD-73.zip [retrieved on 2011-01-20]

## Description

### Field of the Invention

The present invention relates to a communications technology, and in particular, to a method, an apparatus, and a system for processing a Real Time Streaming Protocol (RTSP) message.

### Background of the Invention

The media gateway controller (MGC) and media gateway (MG) are two key components on a packet network. The MGC is responsible for call control function while the MG is responsible for service bearing function, thereby a call control plane is separated from a service bearing plane. In this way, network resources can be shared sufficiently, device upgrade and service expansion can be simplified, and the costs of development and maintenance can be reduced dramatically.Media gateway control protocols are the main protocols for communication between the MG and the MGC. At present, the widely used protocols include Media Gateway Control Protocol (MGCP) and H.248/MeGaCo. The MG communicates with other MGs by using protocols including Real-time Transport Protocol (RTP).

RTSP sets up and controls one or multiple continuous media streams that are synchronized, for example, audio streams and video streams. The media stream may be a unicast or multicast stream. Although the continuous media stream may be crossed with the control stream, RTSP does not send a continuous media stream. That is, RTSP plays the role of remote network control of a multimedia server. RTSP provides an extendable framework so that the real-time data (for example, audio and video data) may be transmitted on a controlled basis and according to actual needs. The data source includes live data and stored clips. RTSP is used to control multiple data transmission sessions and provides method for selecting transmission channels, such as by using User Datagram Protocol (UDP), and multicast UDP and Transmission Control Protocol (TCP). In addition, RTSP provides a RTP-based method for selecting transmission mechanisms.

There are at least the following problems in the prior art:The MG may send media data streams between different IP networks and process these media data streams, but cannot forward and process RTSP messages. Therefore, the MG may discard the received RTSP messages.

Editor H.248.55: "Updated draft new ITU-T" Recommendation H.248.55 relates to resource control mechanisms where the PACF should support different resource control modes in order to handle different types of user equipment (UE), customer premises equipment (UE/CPE) and/or transport QoS capabilities.

### Summary of the Invention

Embodiments of the present invention provide a method, an apparatus, and a system for processing an RTSP message so that the MG can forward and process the RTSP messages.

A method for processing an RTSP message in an embodiment of the present invention includes:
creating a context and a first IP termination and a second IP termination in the context according to a first instruction from an MGC, and negotiating a remote address and a local address for receiving and/or sending (hereafter referred to as receiving/sending) RTSP messages on the first IP termination and a remote address and a local address for receiving/sending RTSP messages on the second IP termination; and
after receiving a first RTSP message from a first IP network through the first IP termination, sending a second RTSP message to a second IP network through the second IP termination; and/or after receiving a second RTSP message from the second IP network through the second IP termination, sending a first RTSP message to the first IP network through the first IP termination wherein before the sending the second RTSP message to the second IP network through the second IP termination, the method further comprises: reporting content of the first RTSP message to the MGC; and the sending the second RTSP message to the second IP network through the second IP termination comprises: receiving a second instruction from the MGC, and sending the second RTSP message specified by the MGC through the second IP termination, wherein the second RTSP message has the same content as the first RTSP message or the second RTSP message has content of the first RTSP message modified by the MGC.

An MG provided in an embodiment of the present invention includes:a topology connection setting unit, adapted to create a context and a first IP termination and a second IP termination in the context according to an instruction from an MGC, set remote addresses for receiving/sending RTSP messages on the first IP termination and the second IP termination, and allocate local addresses for receiving/sending RTSP messages on the first IP termination and the second IP termination; and
an RTSP message transceiver, adapted to receive an RTSP message from an IP network where the first IP termination is located through the first IP termination, and send the unchanged or modified RTSP message to an IP network where the second IP termination is located through the second IP termination wherein the MG further comprises:
an event reporting unit, adapted to detect the RTSP message that the MGC requests to detect on an IP network where the first IP termination is located, and report content of the RTSP message to the MGC through an event; and
a command receiving unit, adapted to send an RTSP reply through the receiving IP termination according to a command sent from the MGC or forward the RTSP message through the second IP termination.

A system for processing an RTSP message in an embodiment of the present invention includes an MG and an MGC.

The MG is adapted to: create a context and a first IP termination and a second IP termination in the context according to a first instruction from the MGC, and set remote addresses for receiving/sending RTSP messages on the first IP termination and the second IP termination; allocate local addresses for receiving/sending RTSP messages on the first IP termination and the second IP termination; receive an RTSP message from an IP network where the first IP termination is located through the first IP termination, and send the unchanged or modified RTSP message to an IP network where the second IP termination is located through the second IP termination , wherein before the sending a second RTSP message to the second IP network through the second IP termination, the MG reports content of the first RTSP message to the MGC; and receives a second instruction from the MGC, and sends the second RTSP message specified by the MGC through the second IP termination, wherein the second RTSP message has the same content as the first RTSP message or the second RTSP message has content of the first RTSP message modified by the MGC.The MGC is adapted to: instruct the MG to create the context and the first IP termination and the second termination in the context, and set the local addresses and remote addresses for receiving/sending RTSP messages on the first IP termination and the second IP termination.

In embodiments of the present invention, the MG creates a context and the first IP termination and the second IP termination in the context, and sets remote addresses and local addresses for receiving/sending RTSP messages on the first IP termination and the second IP termination. Thus, the MG can forward and process the RTSP messages.

### Brief Description of the Drawings

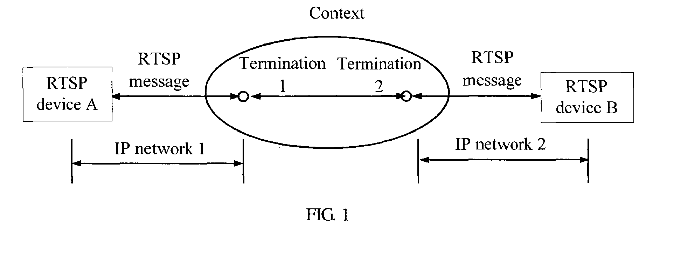

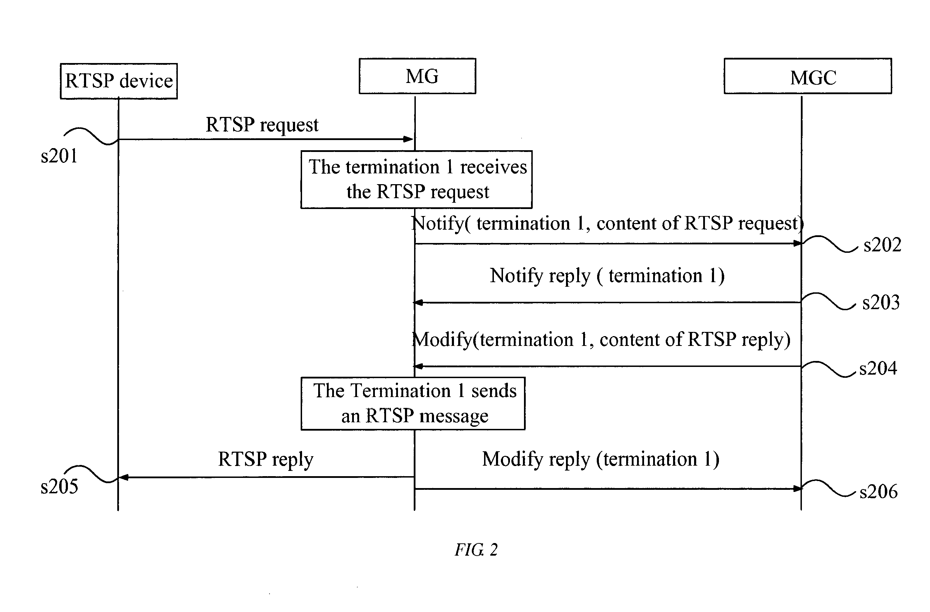

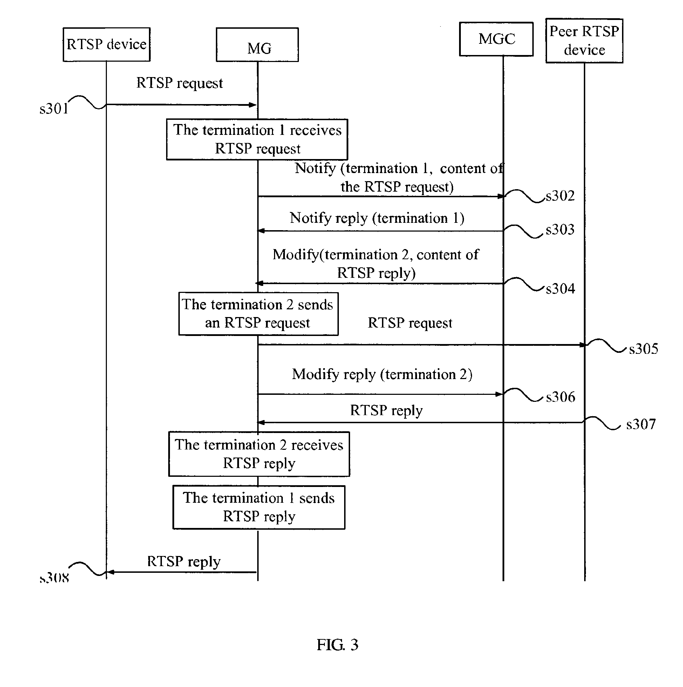

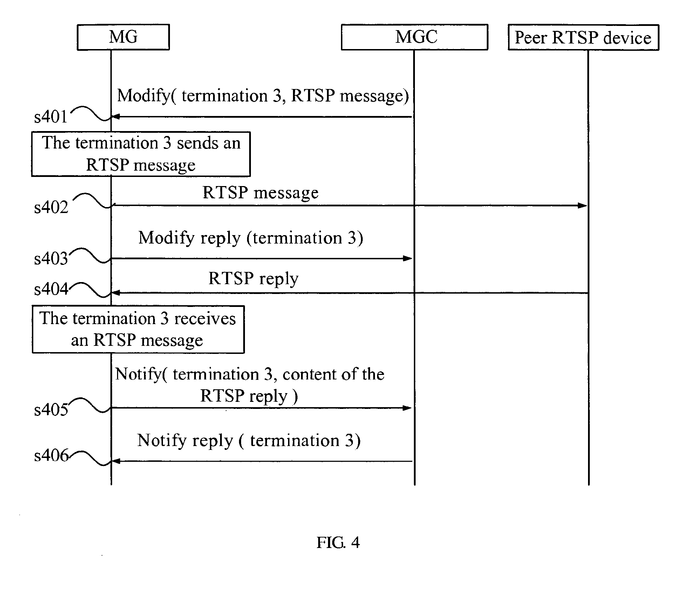

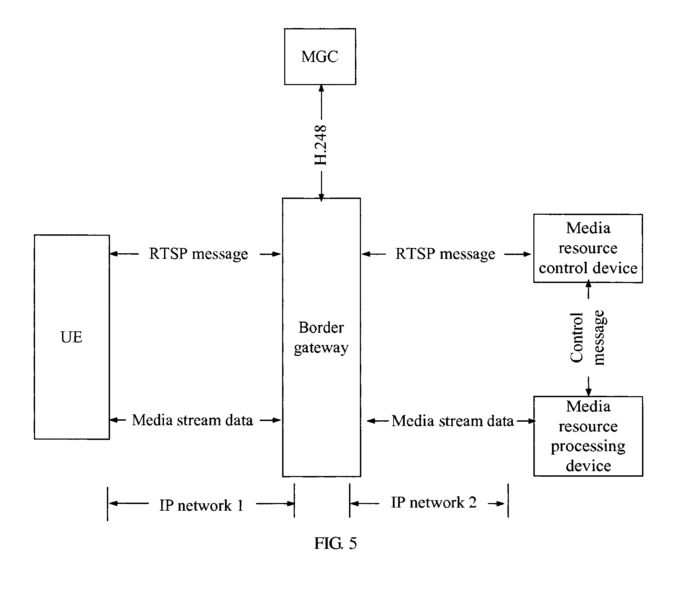

FIG. 1 is a schematic diagram illustrating a context of an H.248 termination that sends an RTSP message in Embodiment 1 of the present invention;FIG. 2 shows a process in which an MGC controls an MG to directly respond to an RTSP message in Embodiment 2 of the present invention;FIG. 3 shows a process in which an MGC controls an MG to forward an RTSP message in Embodiment 3 of the present invention;FIG. 4 shows a process in which an MGC controls an MG to receive/send an RTSP message in Embodiment 4 of the present invention; and Fig. 5 is a schematic diagram illustrating a border gateway between two IP networks in an embodiment of the present invention.

### Detailed Description of the Embodiments

FIG. 1 is a schematic diagram illustrating a context of an H.248 termination that sends an RTSP message in Embodiment 1 of the present invention.

In this embodiment, the RTSP message may be an RTSP request or an RTSP reply.

As shown in FIG. 1, the first IP termination and the second IP termination are located on the first IP network (the IP network 1 shown in FIG. 1) and the second IP network (the IP network 2 shown in FIG. 1) respectively, where the first IP termination (that is, termination 1) is hereinafter referred to as IP termination 1 and the second IP termination (that is, termination 2) is hereinafter referred to as IP termination 2.

The IP termination is a virtual termination and is allocated to a network interface.

The network interface where the termination 1 is located is on the IP network 1, and the network interface where the termination 2 is located is on the IP network 2.

The termination 1 and the termination 2 may be adapted to receive/send and process media data streams (for example, RTP data streams and RTCP data streams) while receiving/sending and processing RTSP messages. The termination 1 and the termination 2 may also be adapted to receive/send and process only the RTSP messages.

On the IP termination, the RTSP messages and media data streams may be described in different stream descriptors or in the same stream descriptor through different Session Description Protocol (SDP) groups. The functions of receiving/sending data streams and processing data streams are implemented by the MG, and thus are not described herein.

The process in which the MGC controls the MG to negotiate the local address and remote address for receiving/sending RTSP messages on the IP termination is similar to the process of negotiating the local address and remote address for receiving/sending media data streams.

The allocated local address is generally the destination address for receiving media streams or RTSP messages. However, the local address may also be used as the source address for sending media streams.

A topology connection relationship is set between the IP termination 1 and the IP termination 2 in the same context.

The H.248 protocol supports the following types of topology connection relationship: bidirectional discontinuity, bidirectional continuity, and unidirectional continuity.

After the address negotiation is completed, the IP termination 1 receives an RTSP message from the IP network 1, and sends the RTSP message to the IP network 2 through the IP termination 2 by using the topology connection between the terminations in the context (the continuity from the IP termination 1 to the IP termination 2 is enabled). Similarly, the IP termination 2 may also send the RTSP message received from the IP network 2 to the IP network 1 through the IP termination 1 by using the topology connection between the terminations in the context (the continuity from the IP termination 2 to the IP termination 1 is enabled).

The preceding capability negotiation process (including negotiations about the receiving/sending addresses and RTSP coding/decoding) on the IP termination may be implemented by SDP information that carries the IP address and port for receiving/sending RTSP messages.

For example, the MGC sends a command for creating IP terminations or a command for modifying IP terminations to the MG.

The local (or the local end) SDP information includes the following parts:v=0
c=IN IP4 $
m=message $ udp RTSP

The remote SDP information includes the following parts:v=0
c=IN IP4 192.168.200.10
m=message 10000 udp RTSP

In the local SDP information, "v=0" indicates that the SDP version is 0; "c=IN IP4 $" describes the connection property; "IN IP4" indicates that the IPv4 protocol is used; "$" indicates that the MG is required to allocate an address to the termination; "m=message $ udp RTSP" describes the media property; "UDP" indicates the UDP protocol; "$" indicates that the MG is required to allocate a UDP port; "message" indicates that the media type is message; "RTSP" indicates that the RTSP format is used.

In the remote SDP information, "v=0" indicates that the SDP version is 0; "c=IN IP4 192.168.200.10" indicates that the IPv4 protocol is used and that the remote address is 192.168.200.10; "m=message 10000 udp RTSP" indicates that the remote UDP port is 10000, that the media type is message, and that the RTSP format is used.

Although the RTSP message is sent by using the UDP protocol in the preceding example, the RTSP message may also be sent by using other protocols.

If other transport layer protocols are used, the content in the "m=" line of the SDP information needs to be changed.

For example, if the IP termination sends an RTSP message by using the TCP protocol, the format of the "m=" line of the local SDP information may be "m=application 9 tcp iptv_rtsp".

The media type and format may be ignored during the negotiation. For example, the "m=" line of the local SDP information may also be "m=- $ udp -".

The local SDP information in the RTSP reply that the MG returns to the MGC includes the following parts:
v=0
c=IN IP4 192.168.200.100
m=message 20000 udp RTSP

The above SDP information indicates that the MG allocates the address 192.168.100.100 and port 20000 to the IP termination, where the address and the port are used to send UDP data streams. The RTSP message may be received or sent through this address.

The RTSP description and media stream description may be stored in different stream descriptors or in the same stream descriptor.

For example,v=0
c=IN IP4 $
m=message $ udp RTSP
v=0
c=IN IP4 $
m=audio $ RTP/AVP 8

In Embodiment 1 of the present invention, the MGC notifies the MG of the remote SDP information by creating or modifying a termination, and from the reply returned by the MG, the MGC obtains the IP address and port that the MG allocates for receiving and/or sending RTSP messages.

In embodiments of the present invention, the RTSP message may be received or sent by using different addresses. However, in actual applications, the RTSP message is received or sent by using the same address.

In addition, the IP termination may be adapted to receive and send RTSP messages or may be adapted to receive or send RTSP messages only. For example, it only processes the unidirectional RTSP messages.

In actual applications, one or multiple H.248 messages may be adapted to implement the following process.

For example, when terminations are added, the MGC does not provide the remote SDP information. Then, the MGC notifies the remote SDP information through a Modify message.

If the topology relationship is set between the termination 1 and the termination 2, the RTSP message received by one of the termination 1 and the termination 2 may be sent through the other termination.

In addition, if the MG that forwards the RTSP message supports the creation of interface-level terminations on the MG in routing mode, the preceding SDP method may not be used to negotiate the IP address and port for receiving/sending RTSP messages on these terminations, but these terminations can still receive/send RTSP messages.

After receiving an RTSP message, the MG may report the RTSP message to the MGC through an H.248 event; after making a decision, the MGC may instruct the MG to send an RTSP reply or instruct the IP termination of the MG to forward the RTSP message. Before the RTSP message is forwarded, the RTSP message may be updated by the MG according to an instruction from the MGC.

The MG may be autonomous.

After the termination 1 of the MG receives an RTSP message, the termination 1 does not report the RTSP message to the MGC, but forwards the RTSP message to the termination 2. Before forwarding the RTSP message, the termination 1 may modify the RTSP message autonomously.

Some RTSP messages carry media stream information, for example, IP address AA1 and port P1 of the media stream received by an RTSP device A, but this address is invisible to the peer end of the media stream. Thus, the MG autonomously allocates an IP address BB2 and port P2 for receiving the media stream on the network interface of the termination 2. When the MG forwards the RTSP message, the MG replaces the AA1 and P1 in the RTSP message with the BB2 and P2.

The MG needs to perform similar operations on the RTSP message in the reverse direction. That is, the MG autonomously allocates media resources and replaces related content in the RTSP message. Details are not described.

In autonomous mode, after the media resources allocated by the MG are used completely, the MG releases the media resources.

Embodiment 2 of the present invention provides a process in which the MGC controls the MG to forward an RTSP message. With reference to FIG. 1 and FIG. 3, the process includes the following steps:

Step s301: The RTSP device A sends a first RTSP request to the MG.

Step s302: The termination 1 of the MG receives the first RTSP request, and reports the content of the first RTSP request to the MGC through an H.248 event.

The termination 1 already determines the IP address and port for receiving the RTSP request and/or the destination IP address and port for sending the RTSP request by using the method described in Embodiment 1.

Step s303: The MGC sends a Notify reply to the MG.

Step s304: The MGC instructs the MG to send a second RTSP request through the termination 2 by sending a Modify message.

The MG may construct the second RTSP request to be sent by the termination 2 according to the first RTSP request or the content of the first RTSP request, and information stored in the MG.The termination 2 determines the IP address and port for receiving the RTSP request and/or the destination IP address and port for sending the RTSP request by using the method described in Embodiment 1.

In this step, the MGC may replace the content in the RTSP request received by the termination 1, including replacing the address for receiving/sending the media stream.

For example, if the media data stream and the RTSP request are processed on the same IP termination, the RTSP device A on the IP network 1 shown in FIG. 1 may add the IP address A1 and port P1 for receiving the media stream S1 to the RTSP message M1.

The media stream is provided by a peer RTSP device B on the IP network 2.

Because the RTSP device A is isolated by the MG, the RTSP device A is not directly reachable to the peer RTSP device B on the IP network 2. Thus, the RTSP request is sent to the IP termination 1 on the MG. The IP termination 1 implements such functions as forwarding the S1 and receiving/sending the RTSP message on the IP network.

The IP termination 2 on the IP network 2 implements such functions as receiving the S1 and receiving/sending the RTSP message on the IP network 2.

Before the MG forwards the RTSP request M1 to the remote RTSP device B through the IP termination 2, the MG needs to replace the IP address A1 and port P1 in the M1 with the IP address and port that are allocated by the IP termination T2 for receiving the media stream S1.

After the S1 arrives at the IP termination 2, the S1 is sent to the IP network 1 through the IP termination 1, and then forwarded to the RTSP device A on the IP network 1.

Similarly, if the IP termination 1 that receives the media stream needs to obtain the source IP address and port of the media stream, the MG needs to replace the corresponding header or SDP information when forwarding the RTSP message.

The principle is the same as that for replacing the destination address of the media stream.

Because the source address of the media stream is replaced with the IP address and port for sending the media stream on the MG after the media stream is forwarded by the MG, the IP address and port for sending the media stream carried in the RTSP message need to be replaced with the IP address and port that are allocated for sending the media stream when the MG forwards the media stream.

In this embodiment, when the same termination (for example, the IP termination 2) processes the RTSP message and media stream, the termination may allocate the same or different IP addresses and ports for the RTSP message and/or the media stream.

The MG may also create terminations for the RTSP message and the media stream respectively. However, this is unnecessary in most circumstances.

In some cases, for example, in the same session, the media stream and the RTSP message are sent through different paths (possibly through two different MGs), and the MG is responsible for receiving/sending the RTSP message only, and does not receive/send the media stream.

Regardless of whether the RTSP message and the media stream are processed by the same termination, the process is always the similar.

As mentioned above, the MG needs to allocate resources such as IP addresses and ports for receiving/sending media streams.

Therefore, the process implicitly includes an optional step before this step. That is, the MGC instructs the MG to allocate these resources for receiving/sending media streams on a new termination or a current termination through the Add or Modify command of H.248.

The MG adds the allocated IP address and port to a reply and returns the reply to the MGC through SDP.

The MGC may construct a second RTSP request by using such information.

Step s305: The MG sends a second RTSP request to the peer RTSP device through the termination 2 according to the instruction.

The content of the second RTSP request may be the same as the content of the first RTSP message in step s301. The MG may also modify the content of the first RTSP message in step s301 according to the instruction from the MGC.

The MG may set a topology relationship (for example, changing the relationship to isolate) between the termination 1 and the termination 2 to avoid the case that the termination 2 sends the RTSP message according to the instruction from the MGC while forwarding the RTSP message received by the termination 1.

Step s306: The MG sends a Modify reply to the MGC.

Step s306 may be executed before step s305.

Step s307: The MG receives a reply to the second RTSP request on the termination 2.

Step s308: The MG forwards the RTSP reply to the RTSP client through the termination 1.

Between step s307 and step s308, the MG may report the received RTSP reply to the MGC and receive an instruction from the MGC to determine the content of the RTSP reply sent to the RTSP device.

This principle is the similar as that in step s302, step s303, step s304, and step s306, and is not further described.

The MG may process the RTSP request and the RTSP reply separately. For example, an MG processes the RTSP request only, while the RTSP reply is not sent through the MG (but through other transmission paths) or other IP terminations on the MG.

The purpose of integrating the two processes into one process shown in FIG. 3 is to describe an entire process of processing the RTSP request and the RTSP reply. In actual applications, the present invention may be applied to the RTSP request only or the RTSP reply only.

If the rule of processing the RTSP message is configured on the MG, step s302, step s303, step s304, and step s306 are optional.

That is, the MG may forward the RTSP request by itself. The RTSP request may be updated by the MG before being forwarded.

This configuration may be completed or updated by the MGC.

This configuration may include replacement logic of the IP address and port for receiving/sending the media stream and replacement logic of some fields and headers in the RTSP message. The configuration function is further described later.

In Embodiment 2, the RTSP device and the peer RTSP device are the RTSP client and the RTSP server respectively or the RTSP server and the RTSP client respectively.

If interactions between the RTSP clients or between the RTSP servers are permitted by using the RTSP protocol, the RTSP device and the peer RTSP device may be RTSP clients or RTSP servers.

In embodiments of the present invention, the MGC controls the MG to negotiate the local address and remote address for receiving/sending RTSP messages on IP terminations. In some scenarios, a single IP termination can also process RTSP messages.

To distinguish from the termination provided in Embodiment 2, the IP termination that processes an RTSP message independently is called a third IP termination, and the RTSP message processed by the third IP termination is called a third RTSP message.

The third IP termination may be the termination 1 or the termination 2 shown in FIG. 1 or a specially created termination.

The following describes the third IP termination with reference to specific scenarios.

Embodiment 3 provides a process in which the MGC controls the MG to respond to an RTSP message directly. As shown in FIG. 2, the third termination is the termination 1, and the process includes the following steps:

Step s201: The RTSP device sends a third RTSP message to the MG, for example, an RTSP request.

Step s202: The termination 1 of the MG receives the RTSP request, and reports the content of the RTSP request to the MGC through an H.248 event.

The termination 1 already specifies the IP address and port for receiving the RTSP message by using the method provided in Embodiment 1.

Step s203: The MGC sends a Notify reply to the MG.

Step s204: The MGC instructs the MG to send an RTSP reply through the termination 1 by sending a Modify message.

The Modify message carries the content of the RTSP reply, which may be the RTSP message or the content of the RTSP message.

For example, if the required bandwidth in the RTSP request cannot be met, the MGC instructs the MG to return an error code.

Step s205: The MG sends an RTSP reply to the termination 1 according to the instruction.

Step s206: The MG sends a Modify reply to the MGC.

Step s206 may be executed before step s205.

If the RTSP message processing logic is configured on the MG or set by the MGC, step s202, step s203, step s204, and step s206 are optional. That is, the MG may respond to the RTSP request by itself, without interacting with the MGC.

The RTSP device is the RTSP client or the RTSP server.

In Embodiment 4, if an H.248 terminal device (for example, the residential gateway (RG) in the UE) needs to support the RTSP function, the MGC needs to control the MG to receive/send RTSP messages, so that the UE that supports H.248 and includes an MG such as an RG can support the receiving/sending of RTSP messages.

As shown in FIG. 4, the process includes the following steps:Step s401: The MGC instructs the MG to send a third RTSP message through the third IP termination (the termination 3) by sending a Modify message, for example, an RTSP request.

The RTSP request carries the content of the RTSP message.

The termination 3 already determines the IP address and port for receiving the RTSP request and/or the destination IP address and port for sending the RTSP request by using the method described in Embodiment 1.

Step s402: The MG sends an RTSP request through the termination 3 according to an instruction of the MGC.Step s403: The MG sends a Modify reply to the MGC.

Step s404 may be executed before step s403.

Step s404: The MG receives an RTSP reply on the termination 3.

Step s405: The MG reports the content of the received RTSP reply to the MGC through an H.248 event.

Step s406: The MGC sends a Notify reply to the MG.

When resources for receiving/sending the media stream need to be allocated on the MG, the MGC allocates resources by creating or modifying terminations on the MG.

The resources such as the IP address and port in the reply returned by the MG are used to describe the media information in the RTSP message.

In Embodiment 5 of the present invention, the MG may act as the cache of the media stream.

The MG caches the media data. As shown in FIG. 1, after the MG receives a request for obtaining media streams from the RTSP device A, the MG may request media streams from the RTSP device B or provide the RTSP device A with the media data cached on the MG.

In this case, the MG may terminate the RTSP message, send a reply to the RTSP device A, and provide the RTSP device A with the media stream data cached on the MG.

Some of the media streams requested by the RTSP device A may be provided by the cache on the MG, and some are obtained by the MG from other RTSP devices (for example, the RTSP device B shown in FIG. 1), and then forwarded to the RTSP device A.

In this embodiment, the MG may respond to the RTSP request sent from the RTSP device A by itself or report the content of the RTSP request sent from the RTSP device A to the MGC, or the MGC instructs the MG to send a reply to the RTSP device A.

Similarly, the MG may receive/send the RTSP message from the RTSP device B by itself, or report the content of the received RTSP message and/or send the RTSP message according to the instruction from the MGC.

To implement each process in Embodiment 2 to Embodiment 5, the H.248 protocol needs to be extended. The purpose of the extension is to implement the following functions: The MG reports a detected RTSP message through an extended event that carries the content of the RTSP message; the MGC instructs the MG to send an RTSP message through an extended signal that carries the content of the RTSP message by using parameters; the MGC sets rules of processing the RTSP message on the MG by using extended properties, for example, changing the rules of RTSP message headers. According to these rules, the MG may update and forward the RTSP message autonomously, thus reducing interactions with the MGC.

The following describes a specific extension scheme - extending the RTSPfunc package of H.248 and extending the RTSpe event in the RTSPfunc package. The RTSpe event includes the following parameters:
1. mf: method filter parameter. By using this parameter, the MGC notifies the MG of an RTSP method list to be reported.

For example, only the setup method and the teardown method need to be detected and reported.

This parameter is an enumeration list, with the value equal to each method supported by RTSP.
2. tt : bearer layer forwarding switch parameter. By using this parameter, the MGC informs the MG of whether to forward the reported RTSP message at the bearer layer, for example, whether the termination 1 shown in FIG. 1 forwards the received RTSP message to the termination 2 at the bearer layer.

After receiving this event, the MGC may update the RTSP message, and then instruct the MG to forward the updated RTSP message through the termination 2. However, the MG may also forward the RTSP message through the internal topology relationship (the continuity from the termination 1 to the termination 2 is permitted). In this way, two copies of the RTSP message may be sent to the destination address.

If the MGC controls the forwarding of the reported RTSP message, the MGC may inform the MG of whether to forward the reported RTSP message at the bearer layer by using this parameter.

This parameter is a switch variable.

The value of this parameter may be "on/off", and the default value is "on".

If the value is "on", the MG forwards the RTSP message autonomously.

If the value is "off", the MG does not forward the RTSP message.

Parameters may also be defined to request the MG to report an RTSP message related to the QoS index.

For example, the following parameters may be defined:
3. br: bandwidth report parameter. This parameter is a switch variable, with the value "on/off". The default value is "off". If this parameter value is "on" and the RTSP message received by the termination involves the transmission bandwidth, the RTSP message needs to be reported.
4. sc: speed change parameter. This parameter is a switch variable, with the value "on/off". The default value is "off". If this parameter value is "on" and the speed header in the RTSP message received by the termination is changed, this event needs to be reported.

Other parameters may also be defined to trigger the MG to report the event when the RTSP message carries other information related to the QoS index.
5. sap: media stream parameter. This parameter is a switch variable, with the value "on/off". The default value is "on". If this parameter value is "on" and the RTSP message received by the termination carries the media stream description information, this event needs to be reported.
6. rc: report content parameter. This parameter describes the form of the information that the MGC requests the MG to report. For example, the MGC may request the MG to report the entire RTSP message body or some specified content in the RTSP message by using this parameter. Examples are as follows: the MGC requests the MG to report specified content (for example, the Speed header); the MGC requests the MG to report content of specific options in a specified header (for example, the dest_addr field and src_addr field in the Transport header).

By using this parameter, the MGC may obtain required content from the MG.

The ObservedEventsDescriptor parameter reported in the event includes:

### 1. RTSP message content.

This parameter may be defined to directly report the entire RTSP message to the MGC as the content of the parameter.

In this case, this parameter is a string.

The MG may be required to break down the content of the RTSP message and report specified content, for example, reporting the source address and destination address in the Transport header of the RTSP message. Other parameters may also be defined to report each piece of information after the breakdown that the MGC requests. Multiple methods for defining these parameters may be available, and are not further described.

The signal RTSPs may be defined. The parameter of this signal includes the content of the RTSP message. The entire RTSP message may be defined as the content of this parameter and sent to the MG. This parameter is a string.

After the MG receives the signal, the MG sends the RTSP message carried in this parameter to an address specified by the remote descriptor.

In other feasible methods, the content of the RTSP message are broken down into each piece of information and sent through multiple parameters. The MG constructs an RTSP message according to the information carried in these parameters, and sends the RTSP message. Details are not described.

The following properties may be defined so that the MGC sets rules for processing the RTSP message on the MG.

1. requrl. This property is used by the MGC to set a rule for processing the "Request-URI" in the RTSP message on the MG.

This property is a string.

This parameter is null by default, indicating that the "Request-URI" is not converted.

If the value of the requrl parameter is "RTSP://example.com/fizzle/foo", the MG receives the following message on the termination where the requrl parameter is set.C->S: TEARDOWN RTSP: // bigserver.com/fizzle/foo RTSP/1.0
CSeq:892
Session: 12345678

Then, the MG may modify the message as follows before forwarding the message:
C->S: TEARDOWN RTSP: // example.com/fizzle/foo RTSP/1.0
CSeq:892
Session: 12345678

2. srcaddrexp. This property is a string, indicating a value that is used to replace the content of the src_addr field in the Transport header of the received RTSP message. For example, if the value of this property is "10.11.1.100:9000"/"10.11.1.100:9001", it indicates that the content of the src_addr field in the received Transport header is replaced with "10.11.1.100:9000"/"10.11.1.100:9001".

Other similar properties may also be defined to replace the source address and/or destination address of the media stream involved in the SDP information of the RTSP message.

The IP termination where the MG receives/sends the RTSP message and the IP termination where the MG receives/sends the media stream may be the same or different.

After a unicast media stream passes through the MG, the source address of the media stream may be changed to the source address for sending the media stream on the MG. When the unicast media stream arrives at the MG, the destination address of the media stream is the address of the MG. When the MG forwards the unicast media stream on the other IP network, the destination address of the MG also needs to be changed to the destination address.

The RTSP message forwarded by the MG may carry the IP address and port for receiving/sending the media stream on the RTSP device. Generally, there is no direct route between the device address on one IP network of the MG and the device address on the other IP network of the MG. Therefore, the MG needs to replace the affected part of the source address and destination address of the media stream carried in the RTSP message with the address allocated on the IP termination of the MG.

For better description, the source address of the media stream indicates the source IP address and port of the media stream, and the destination address indicates the destination IP address and port.

The following describes the preceding address conversion process by using an example. As shown in FIG. 5, the process includes the following steps:The border gateway between two IP networks shown in FIG. 5 is also an MG. The MG sends media data streams between different IP networks, and processes these media data streams. In addition, the MG forwards and processes RTSP messages.

1: The termination 1 receives the following RTSP message from the RTSP device A.C->S: SETUP RTSP://example.com/foo/bar/baz.rm RTSP/2.0
CSeq: 302
Transport: RTP/AVP;unicast;dest_addr=":4588"/":4589",
RTP/AVP/TCP;unicast;interleaved=0-1

The destination port of the media stream is 4588 and 4589. However, the port that the MG allocates to the media stream on the IP network 2 is 8000 and 8001.

2: The termination 2 sends the following message when forwarding the RTSP message to the destination device B.
C->S: SETUP RTSP://example.com/foo/bar/baz.rm RTSP/2.0
CSeq: 302
Transport: RTP/AVP;unicast;dest_addr=":8000"/":8001",
RTP/AVP/TCP;unicast;interleaved=0-1

3: The termination 2 receives the following reply.
S->C: RTSP/2.0 200 OK
CSeq: 302
Date: 23 Jan 1997 15:35:06 GMT
Server: PhonyServer 1.1
Session: 47112344;timeout=60
Transport: RTP/AVP;unicast;dest_addr=":8000"/":8001";
src_addr="192.0.2.241:6256"/"192.0.2.241:6257";
ssrc=2A3F93ED
Accept-Ranges: NPT

"192.0.2.241:6256" and "192.0.2.241:6257" are the source IP address and port of the media stream respectively. However, the IP address and port that the MG allocates to the media stream on the IP network 1 are "10.11.1.100:9000" and "10.11.1.100:9001" respectively.

4: The termination 1 sends the following message when forwarding the RTSP message to the RTSP device A.
Session: 47112344; timeout=60
Transport: RTP/AVP;unicast;dest_addr=":4588"/":4589";
src_addr="10.11.1.100:9000"/" 10.11.1.100:9001";
ssrc=2A3F93ED
Accept-Ranges: NPT

Through the conversion of the address for receiving/sending the media stream, the RTSP devices on both sides of the MG exchange the media stream with the IP termination on the MG, where the MG is responsible for converting and sending the RTSP message.

The MG may convert and send the RTSP message by using the following two methods.

Method 1: The MG reports the received RTSP message to the MGC; the MGC sends an RTSP message that carries the converted IP address and port to the MG. This method is also used in step 302 to step 306 in the process shown in FIG. 3.

Method 2: The MGC sends a conversion rule to the MG in advance; the MG replaces related parts in the RTSP message according to the rule, for example, the IP address and port of the media stream, specified header, or field.

A system for processing an RTSP message is provided in an embodiment of the present invention. The system includes:
an MG, adapted to: create a context and a first IP termination and a second IP termination in the context according to an instruction from an MGC, and set remote addresses for receiving/sending RTSP messages on the first IP termination and the second IP termination; allocate local addresses for receiving/sending RTSP messages on the first IP termination and the second IP termination; receive an RTSP message from an IP network where the first IP termination is located through the first IP termination, and send the unchanged or modified RTSP message to an IP network where the second IP termination is located through the second IP termination; and
the MGC, adapted to: instruct the MG to create the context and the first IP termination and the second termination in the context, and set the local addresses and remote addresses for receiving/sending RTSP messages on the first IP termination and the second IP termination.

The MG includes:
a topology connection setting unit, adapted to create a context and a first IP termination and a second IP termination in the context according to an instruction from the MGC, and set remote addresses for receiving/sending RTSP messages on the first IP termination and the second IP termination; allocate local addresses for receiving/sending RTSP messages on the first IP termination and the second IP termination; and
an RTSP message transceiver, adapted to receive an RTSP message from an IP network where the first IP termination is located through the first IP termination, and send the unchanged or modified RTSP message to an IP network where the second IP termination is located through the second IP termination.

The topology connection setting unit includes: a topology connection storing subunit, adapted to pre-store the local address and remote address that are preset by the MGC for receiving/sending RTSP messages on the IP termination; and obtain the local address and remote address that are set by the MGC for receiving/sending RTSP messages on the IP termination.

The MG further includes:
an event reporting unit, adapted to: detect a first RTSP message that the MGC requests to detect on the IP network where the first IP termination is located, and report the content of the first RTSP message to the MGC through an event; and
a command receiving unit, adapted to send an RTSP reply through the receiving IP termination according to a command sent from the MGC or forward the RTSP message through other IP terminations.

The MG further includes: a message updating unit, adapted to determine the content of an RTSP message to be sent according to an extended signal instruction sent from the MGC.

Another system for processing an RTSP message is provided in an embodiment of the present invention. The system includes: an MG, adapted to create a context and a third IP termination in the context according to an instruction from the MGC, and negotiate the remote address and local address for receiving/sending RTSP messages on the third IP termination; and after receiving a third RTSP message from an IP network where the third IP termination is located through the third IP termination, report the content of the third RTSP message to the MGC.

In embodiments of the present invention, the border gateway is able to forward and process RTSP messages; the UE that supports the H.248 protocol is able to support the receiving/sending of RTSP messages.

Through the descriptions of the preceding embodiments, those skilled in the art may understand that the present invention may be implemented by hardware only or by software and a necessary universal hardware platform. Based on such understandings, the technical solution of the present invention may be embodied in the form of a software product. The software product may be stored in a nonvolatile storage medium, which can be a compact disk read-only memory (CD-ROM), USB flash disk, or a removable hard disk. The software product includes a number of instructions that enable a computer device (personal computer, server, or network device) to execute the methods provided in the embodiments of the present invention.The above descriptions are merely exemplary embodiments of the present invention, but not intended to limit the scope of the present invention.

## Claims

1. A method for processing a Real Time Streaming Protocol, RTSP, message, comprising:
creating, by a media gateway, MG, a context and a first IP termination and a second IP termination in the context according to a first instruction from a media gateway controller, MGC, and negotiating a remote address and a local address for receiving/sending RTSP messages on the first IP termination and a remote address and a local address for receiving/sending RTSP messages on the second IP termination; and
after receiving a first RTSP message from a first IP network through the first IP termination, sending, by the MG, a second RTSP message to a second IP network through the second IP termination, wherein before the sending the second RTSP message to the second IP network through the second IP termination, the method further comprises: reporting content of the first RTSP message to the MGC; and the sending the second RTSP message to the second IP network through the second IP termination comprises:
receiving a second instruction from the MGC, and sending the second RTSP message specified by the MGC through the second IP termination, wherein the second RTSP message has the same content as the first RTSP message or the second RTSP message has content of the first RTSP message modified by the MGC.

2. The method of claim 1, wherein the modifying the first RTSP message comprises modifying a source address and/or a destination address of a media stream in the first RTSP message, and the second RTSP message comprises the modified source address and/or modified destination address of the media stream.

3. The method of claim 1, wherein the negotiating the remote address and local address for receiving/sending RTSP messages on the first IP termination and the remote address and local address for receiving/sending RTSP messages on the second IP termination comprises: receiving an extended message sent from the MGC, and allocating addresses to the first IP termination and the second IP termination according to the extended message.

4. A media gateway, MG, comprising:
a topology connection setting unit, adapted to create a context and a first IP termination and a second IP termination in the context according to an instruction from a media gateway controller, MGC, set remote addresses for receiving/sending Real Time Streaming Protocol, RTSP, messages on the first IP termination and the second IP termination, and allocate local addresses for receiving/sending RTSP messages on the first IP termination and the second IP termination; and
an RTSP message transceiver, adapted to receive an RTSP message from an IP network where the first IP termination is located through the first IP termination, and send the unchanged or modified RTSP message to an IP network where the second IP termination is located through the second IP termination; wherein the MG further comprises:
an event reporting unit, adapted to detect the RTSP message that the MGC requests to detect on an IP network where the first IP termination is located, and report content of the RTSP message to the MGC through an event; and
a command receiving unit, adapted to send an RTSP reply through the receiving IP termination according to a command sent from the MGC or forward the RTSP message through the second IP termination.

5. The MG of claim 4, further comprising:
a message updating unit, adapted to determine content of an RTSP message to be sent according to an extended signal instruction sent from the MGC.

6. A system for processing a Real Time Streaming Protocol, RTSP, message, comprising a media gateway, MG, and a media gateway controller, MGC, wherein:
the MG is adapted to create a context and a first IP termination and a second IP termination in the context according to a first instruction from the MGC, and set remote addresses for receiving/sending RTSP messages on the first IP termination and the second IP termination; allocate local addresses for receiving/sending RTSP messages on the first IP termination and the second IP termination; receive an RTSP message from an IP network where the first IP termination is located through the first IP termination, and send the unchanged or modified RTSP message to an IP network where the second IP termination is located through the second IP termination, wherein before the sending a second RTSP message to the second IP network through the second IP termination, the MG reports content of the first RTSP message to the MGC; and
receives a second instruction from the MGC, and sends the second RTSP message specified by the MGC through the second IP termination, wherein the second RTSP message has the same content as the first RTSP message or the second RTSP message has content of the first RTSP message modified by the MGC; and
the MGC is adapted to instruct the MG to create the context and the first IP termination and the second termination in the context, and set the local address and remote address for receiving/sending RTSP messages on the first IP termination and the second IP termination.

## Patentansprüche

1. Verfahren zum Verarbeiten einer Echtzeit-Streamingprotokoll-Nachricht, RTSP-Nachricht, das Folgendes umfasst:
Erzeugen durch ein Medien-Gateway, MG, eines Kontexts und eines ersten IP-Abschlusses und eines zweiten IP-Abschlusses in dem Kontext in Übereinstimmung mit einem ersten Befehl von einem Medien-Gateway-Controller, MGC, und
Aushandeln einer entfernten Adresse und einer lokalen Adresse zum Empfangen/Senden von RTSP-Nachrichten bei dem ersten IP-Abschluss und einer entfernten Adresse und einer lokalen Adresse zum Empfangen/Senden von RTSP-Nachrichten bei dem zweiten IP-Abschluss; und
nach dem Empfangen einer ersten RTSP-Nachricht von einem ersten IP-Netz durch den ersten IP-Abschluss Senden durch das MG einer zweiten RTSP-Nachricht zu einem zweiten IP-Netz durch den zweiten IP-Abschluss, wobei das Verfahren vor dem Senden der zweiten RTSP-Nachricht zu dem zweiten IP-Netz durch den zweiten IP-Abschluss ferner Folgendes umfasst:
Melden von Inhalt der ersten RTSP-Nachricht an den MGC; und das Senden der zweiten RTSP-Nachricht zu dem zweiten IP-Netz durch den zweiten IP-Abschluss Folgendes umfasst:
Empfangen eines zweiten Befehls von dem MGC und Senden der zweiten RTSP-Nachricht, die durch den MGC spezifiziert wird, durch den zweiten IP-Abschluss, wobei die zweite RTSP-Nachricht den gleichen Inhalt wie die erste RTSP-Nachricht hat oder die zweite RTSP-Nachricht Inhalt der ersten RTSP-Nachricht, der durch den MGC modifiziert ist, besitzt.

2. Verfahren nach Anspruch 1, wobei das Modifizieren der ersten RTSP-Nachricht das Modifizieren einer Quelladresse und/oder einer Zieladresse eines Medienstroms in der ersten RTSP-Nachricht umfasst und die zweite RTSP-Nachricht die modifizierte Quelladresse und/oder die modifizierte Zieladresse des Medienstroms umfasst.

3. Verfahren nach Anspruch 1, wobei das Aushandeln der entfernten Adresse und der lokalen Adresse zum Senden/Empfangen von RTSP-Nachrichten bei dem ersten IP-Abschluss und der entfernten Adresse und der lokalen Adresse zum Empfangen/Senden von RTSP-Nachrichten bei dem zweiten IP-Abschluss Folgendes umfasst: Empfangen einer von dem MGC gesendeten erweiterten Nachricht und Zuweisen von Adressen zu dem ersten IP-Abschluss und zu dem zweiten IP-Abschluss in Übereinstimmung mit der erweiterten Nachricht.

4. Medien-Gateway, MG, das Folgendes umfasst:
eine Topologieverbindungs-Einstelleinheit, die dafür ausgelegt ist, einen Kontext und
einen ersten IP-Abschluss und einen zweiten IP-Abschluss in dem Kontext in Übereinstimmung mit einem Befehl von einem Medien-Gateway-Controller, MGC,
zu erzeugen, entfernte Adressen zum Empfangen/Senden von Echtzeit-Streamingprotokoll-Nachrichten, RTSP-Nachrichten, bei dem ersten IP-Abschluss und bei dem zweiten IP-Abschluss festzulegen und lokale Adressen zum Empfangen/Senden von RTSP-Nachrichten bei dem ersten IP-Abschluss und bei dem zweiten IP-Abschluss zuzuweisen; und
einen RTSP-Nachrichten-Sender/Empfänger, der dafür ausgelegt ist, eine RTSP-Nachricht von einem IP-Netz, in dem sich der erste IP-Abschluss befindet, durch den ersten IP-Abschluss zu empfangen und die unveränderte oder modifizierte RTSP-Nachricht zu einem IP-Netz, in dem sich der zweite IP-Abschluss befindet, durch den zweiten IP-Abschluss zu senden; wobei das MG ferner Folgendes umfasst:
eine Ereignismeldeeinheit, die dafür ausgelegt ist, die RTSP-Nachricht, für die der MGC fordert, sie in einem IP-Netz, in dem sich der erste IP-Abschluss befindet, zu detektieren, und Inhalt der RTSP-Nachricht zu dem MGC durch ein Ereignis zu melden; und
eine Befehlsempfangseinheit, die dafür ausgelegt ist, eine RTSP-Antwort durch den empfangenden IP-Abschluss in Übereinstimmung mit einem von dem MGC gesendeten Befehl zu senden oder die RTSP-Nachricht durch den zweiten IP-Abschluss weiterzuleiten.

5. MG nach Anspruch 4, das ferner Folgendes umfasst:
eine Nachrichtenaktualisierungseinheit, die dafür ausgelegt ist, Inhalt einer zu sendenden RTSP-Nachricht in Übereinstimmung mit einem von dem MGC gesendeten erweiterten Signalbefehl zu bestimmen.

6. System zum Verarbeiten einer Echtzeit-Streamingprotokoll-Nachricht, RTSP-Nachricht, das ein Medien-Gateway, MG, und einen Medien-Gateway-Controller, MGC, umfasst, wobei:
das MG dafür ausgelegt ist, einen Kontext und einen ersten IP-Abschluss und einen zweiten IP-Abschluss in dem Kontext in Übereinstimmung mit einem ersten Befehl von dem MGC zu erzeugen und entfernte Adressen zum Empfangen/Senden von RTSP-Nachrichten bei dem ersten IP-Abschluss und dem zweiten IP-Abschluss festzulegen; lokale Adressen zum Empfangen/Senden von RTSP-Nachrichten bei dem ersten IP-Abschluss und bei dem zweiten IP-Abschluss zuzuweisen; eine RTSP-Nachricht von einem IP-Netz, in dem sich der erste IP-Abschluss befindet, durch den ersten IP-Abschluss zu empfangen und die unveränderte oder modifizierte RTSP-Nachricht zu einem IP-Netz, in dem sich der zweite IP-Abschluss befindet, durch den zweiten IP-Abschluss zu senden, wobei vor dem Senden einer zweiten RTSP-Nachricht zu dem zweiten IP-Netz durch den zweiten IP-Abschluss das MG Inhalt der ersten RTSP-Nachricht zu dem MGC meldet; und
einen zweiten Befehl von dem MGC empfängt und die zweite RTSP-Nachricht, die durch den MGC spezifiziert ist, durch den zweiten IP-Abschluss sendet, wobei die zweite RTSP-Nachricht den gleichen Inhalt wie die erste RTSP-Nachricht hat oder die zweite RTSP-Nachricht Inhalt der ersten RTSP-Nachricht, der durch den MGC modifiziert ist, besitzt; und
der MGC dafür ausgelegt ist, das MG anzuweisen, den Kontext und den ersten IP-Abschluss und den zweiten Abschluss in dem Kontext zu erzeugen und die lokale Adresse und die entfernte Adresse zum Empfangen/Senden von RTSP-Nachrichten bei dem ersten IP-Abschluss und dem zweiten IP-Abschluss festzulegen.

## Revendications

1. Procédé de traitement d'un message de Protocole de Flux Multimédia en Temps Réel, RTSP, comprenant :
la création, par une passerelle multimédia, MG, d'un contexte ainsi que d'une première terminaison IP et d'une seconde terminaison IP dans le contexte en fonction d'une première instruction par un contrôleur de passerelles multimédia, MGC, et la négociation d'une adresse distante et d'une adresse locale pour recevoir/envoyer des messages RTSP sur la première terminaison IP et d'une adresse distante et d'une adresse locale pour recevoir/envoyer des messages RTSP sur la seconde terminaison IP ; et
après la réception d'un premier message RTSP depuis un premier réseau IP par le biais de la première terminaison IP, l'envoi, par la MG, d'un second message RTSP à un second réseau IP par le biais de la seconde terminaison IP, le procédé comprenant en outre, avant l'envoi du second message RTSP au second réseau IP par le biais de la seconde terminaison IP : la déclaration du contenu du premier message RTSP au MGC ; et l'envoi du second message RTSP au second réseau IP par le biais de la seconde terminaison IP comprend :
la réception d'une seconde instruction depuis le MGC, et l'envoi du second message RTSP spécifié par le MGC par le biais de la seconde terminaison IP, dans lequel le second message RTSP a le même contenu que le premier message RTSP ou le second message RTSP a un contenu du premier message RTSP modifié par le MGC.

2. Procédé selon la revendication 1, dans lequel la modification du premier message RTSP comprend la modification d'une adresse source et/ou d'une adresse destinataire d'un flux multimédia dans le premier message RTSP, et le second message RTSP comprend l'adresse source modifiée et/ou l'adresse destinataire modifiée du flux multimédia.

3. Procédé selon la revendication 1, dans lequel la négociation de l'adresse distante et de l'adresse locale pour recevoir/envoyer les messages RTSP sur la première terminaison IP et de l'adresse distante et de l'adresse locale pour recevoir/envoyer des messages RTSP sur la seconde terminaison IP comprend : la réception d'un message étendu envoyé depuis le MGC, et l'attribution d'adresses à la première terminaison IP et à la seconde terminaison IP en fonction du message étendu.

4. Passerelle multimédia, MG, comprenant :
une unité de réglage de connexions de topologie, adaptée pour créer un contexte ainsi qu'une première terminaison IP et une seconde terminaison IP dans le contexte en fonction d'une première instruction par un contrôleur de passerelles multimédia, MGC, régler des adresses distantes pour recevoir/envoyer des messages à Protocole de Flux Multimédia en Temps Réel, RTSP, sur la première terminaison IP et la seconde terminaison IP, et attribuer des adresses locales pour recevoir/envoyer des messages RTSP sur la première terminaison IP et la seconde terminaison IP ; et
un émetteur-récepteur de message RTSP, adapté pour recevoir un message RTSP depuis un réseau IP dans lequel est située la première terminaison IP par le biais de la première terminaison IP, et envoyer le message RTSP inchangé ou modifié à un réseau IP où est située la seconde terminaison IP par le biais de la seconde terminaison IP, la MG comprenant en outre :
une unité de déclaration d'événement, adaptée pour détecter le message RTSP que le MGC requiert pour détecter sur un réseau IP où est située la première terminaison IP, et déclarer le contenu du message RTSP au MGC par le biais d'un événement ; et
une unité de réception de commande, adaptée pour recevoir une réponse RTSP par le biais de la terminaison IP réceptrice en fonction d'une commande envoyée depuis le MGC ou acheminer le message RTSP par le biais de la seconde terminaison IP.

5. MG selon la revendication 4, comprenant en outre :
une unité d'actualisation de message, adaptée pour déterminer le contenu d'un message RTSP à envoyer en fonction d'une instruction de signal étendue envoyée par le MGC.

6. Système de traitement d'un message de Protocole de Transmission de Flux Multimédia en Temps Réel, RTSP, comprenant une passerelle multimédia, MG, et un contrôleur de passerelles multimédia, MGC, dans lequel :
la MG est adaptée pour créer un contexte ainsi qu'une première terminaison IP et une seconde terminaison IP dans le contexte en fonction d'une première instruction par un contrôleur de passerelles multimédia, MGC, et régler des adresses distantes pour recevoir/envoyer des messages RTSP sur la première terminaison IP et la seconde terminaison IP ; attribuer des adresses locales pour recevoir/envoyer des messages RTSP sur la première terminaison IP et la seconde terminaison IP ; recevoir un message RTSP depuis un réseau IP où est située la première terminaison IP par le biais de la première terminaison IP, et envoyer le message RTSP inchangé ou modifié à un réseau IP où est située la seconde terminaison IP par le biais de la seconde terminaison IP, dans lequel, avant l'envoi du second message RTSP au second réseau IP par le biais de la seconde terminaison IP, la MG déclare le contenu du premier message RTSP au MGC ; et
reçoit une seconde instruction depuis le MG, et envoie le second message RTSP spécifié par le MGC par le biais de la seconde terminaison IP, dans lequel le second message RTSP a le même contenu que le premier message RTSP ou le second message RTSP a un contenu du premier message RTSP modifié par le MGC ; et
le MGC est adapté pour ordonner à la MG de créer le contexte ainsi que la première terminaison IP et la seconde terminaison IP dans le contexte, et régler l'adresse locale et l'adresse distante pour recevoir/envoyer des messages RTSP sur la première terminaison IP et la seconde terminaison IP.
